# EUROPEAN PATENT SPECIFICATION

(11) **EP 3 386 627 B1**
(45) Date of publication and mention of the grant of the patent: **14.08.2019**
(21) Application number: 16816443.2
(22) Date of filing: 18.11.2016
(51) Int. Cl.: B01J 19/00

(54) **A CONTROL SYSTEM FOR MODELING AND OPTIMIZING A DIESEL HYDROPROCESSING UNIT**
STEUERUNGSSYSTEM ZUR MODELLIERUNG UND OPTIMIERUNG EINER DIESELHYDRIERUNGSEINHEIT
SYSTÈME DE COMMANDE POUR MODÉLISER ET OPTIMISER UNE UNITÉ D'HYDROTRAITEMENT DIESEL

(30) Priority: 08.12.2015 TR 201515610
(43) Date of publication of application: 17.10.2018
(73) Proprietor: Turkiye Petrol Rafinerileri Anonim Sirketi Tupras, 41780 Korfez/Kocaeli (TR); KOC Universitesi, 34450 Istanbul (TR)
(72) Inventor: KURDOGLU, Ummuhan Canan, 41790 Körfez/Kocaeli (TR); ERDOGAN, Murat, 71001 Kirikkale (TR); MUTLU, Mustafa, 71460 Bahsili/Kirikkale (TR); DIKBAS, Mine, 71001 Kirikkale (TR); IS, Gamze, 41790 Körfez/Kocaeli (TR); ARKUN, Yaman, 34450 Sariyer/Istanbul (TR); AYDIN, Erdal, 34147 Bakirköy/Istanbul (TR); CELEBI, Ayse Dilan, 06300 Keçiören/Ankara (TR); SILDIR, Hasan, 34342 Istanbul (TR)
(74) Representative: Cayli, Hülya
(86) International application number: PCT/TR2016/050452
(87) International publication number: WO 2017/099687

(56) References cited:
- WO-A1-2010/042223
- WO-A1-2012/021995
- CA-A1- 2 807 071
- CN-A- 102 393 636
- US-A- 5 521 814

## Description

### Field of the invention

The present invention relates to a control system used for modeling and optimizing an industrial diesel hydroprocessing unit.

### Background Art

In petroleum refineries, there are diesel hydroprocessing (i.e. hydrotreating) units wherein petroleum based products are treated and converted into diesel. A charge of the diesel hydroprocessing unit (petroleum based products supplied to the unit) originates from different sources. Heavy diesel, light diesel, light vacuum gas oil or imported diesel charges are combined and supplied into the unit as a charge. Thus, charge properties of the unit may vary depending on the properties of the crude oil that is being treated, conditions of the operation performed in the crude oil distillation unit and properties of the diesel imported.

A diesel hydroprocessing unit includes hydrodesulfurization reactor beds where desulfurization reactions are performed using hydrogen as well as hydrocracking reactor beds where larger molecules are cracked into smaller molecules using hydrogen. Inlet temperatures of these reactors are controlled so as to control reactions in the beds. By controlling temperature in these reactors, T95 point and sulfur content of diesel product which is the main output of the unit are set to comply with the sales specifications. Basically, sulfur content of diesel product is adjusted with the temperature of hydrodesulfurization beds whereas T95 point of same is adjusted with the temperature of hydrocracking beds.

A diesel hydroprocessing unit has a control platform for further processing. Said platform does not intervene in the inputted charge. Furthermore, sulfur content of the diesel product and the required range of the T95 point, i.e. sales specifications are supplied to the diesel hydroprocessing unit via planning instructions. Completely based on their experiences, the engineers and operators working with the unit assess the properties of the charge inputted and accordingly input to the control platform for further processing the set-points (target values) of the reactor bed exits in order to provide planning instructions. The control platform for further processing intervenes in the inlet temperatures in order to achieve the inputted target values of the reactor bed exit temperatures. It performs said intervention by means of a cooling gas introduced into the interspaces of the reactor beds

In the present system, such an intervention in the reactor beds is performed completely based on experiences. Also, no intervention is made in the inputted charge. This limits workability of the heavier charges. Because the heavier the charge of the unit is made, the more cost effective charge is treated. Also, the fact that an intervention in the reactor beds that is required to produce a higher amount of diesel without exceeding diesel product sales specifications is made completely based on experiences sometimes results in a production in the unit not conforming to the specifications or reduces productivity due to over-cracking etc.

The state-of-art document GB897027A discloses a control method and system for increasing operation efficiency in a petroleum refinery. In the said control method, the cost of operation is reduced based on the flow rate and price of the charge. But, said document is silent about a real-time control.

Another state-of-art document WO2012021995A1 comprises a computer apparatus and method is provided to calculate a refinery operating optimum which integrates with presently available refinery planning and scheduling optimizers and process unit MVCs. Said document also mentions calculation of the desired gas oil feed rate, feed temperature and reaction temperature. However, the system and method in said document is silent about calculation and determination of target values of the bed exit temperature and bed inlet temperature with T95 target point of charge.

### Brief Description of the invention

With the present invention, there is provided a control system used for modeling and optimizing an industrial diesel hydroprocessing unit. Said control system comprises at least one steady state optimization unit that includes models of hydrodesulfurization and hydroprocessing reactor beds and a combined model of a plurality of supply flow components and calculates an optimum point at which the unit must operate using the models therein as well as the current charge components, product price information, operational constraints of the unit and planning instruction information; at least one constrained supervisory model predictive control unit to which operation parameters at optimum point that is calculated in the steady state optimization unit are conveyed and which determines T95 target point of the charge and the target values of the bed exit temperatures using the operation parameters conveyed thereto together with a model; and at least one constrained regulatory model predictive control unit to which T95 target point of the charge and the target values of the bed exit temperatures obtained in the constrained supervisory model predictive control unit are conveyed and which adjusts the amount of the components of the charge to be conveyed to the industrial diesel hydroprocessing unit and the inlet temperatures of the reactor beds in the industrial diesel hydroprocessing unit, based on the T95 target point of the charge.

In the control system according to the present invention, an optimum operation point of the industrial diesel hydroprocessing unit is determined through the steady state optimization unit. Based on the optimum operation point determined, operation parameters of the industrial diesel hydroprocessing unit are formed in constrained supervisory model predictive control unit and the constrained regulatory model predictive control unit. In this way, the industrial diesel hydroprocessing unit is operated in an efficient manner.

### Object of the Invention

An object of the present invention is to provide a control system used for modeling and optimizing an industrial diesel hydroprocessing unit.

Another object of the present invention is to provide a control system that calculates the profitability of the unit taking into account the input and output of the industrial diesel hydroprocessing unit.

Another object of the present invention is to provide a control system that calculates the properties of the charge and the temperatures of the reactor bed in order to enable an industrial diesel hydroprocessing unit to operate at the most profitable point.

### Description of the Drawings

The illustrative embodiments of the control system according to the present invention are illustrated in the enclosed drawings, in which:
Figure 1 is a flow diagram of the hierarchical control structure of a control system.
Figure 2 is an illustrative view of an industrial diesel hydroprocessing unit wherein the control system is used.

All the parts illustrated in the drawings are individually assigned a reference numeral and the corresponding terms of these numbers are listed as follows.

| | |
|---|---|
| Industrial diesel hydroprocessing unit | (S) |
| Steady state optimization unit | (1) |
| Constrained supervisory model predictive control unit | (2) |
| Constrained Regulatory model predictive control unit | (3) |
| Regulatory reactor predictive control unit | (3a) |
| Regulatory blending predictive control unit | (3b) |
| Data input unit | (4) |
| Reactor | (5) |
| Blender | (6) |
| Model updating unit | (7) |
| Analysis unit | (8) |
| Separator | (9) |

### Description of the Invention

In petroleum refineries, petroleum based materials from different charge sources (i.e. heavy diesel, light diesel, light vacuum gas oil or imported diesel charges etc.) are supplied into a diesel hydroprocessing unit wherein they are converted into diesel. Since different materials are treated in different ways to be converted into diesel, diesel hydroprocessing unit must be controlled based on the structure of the charge. In conventional applications, said control is performed manually by an authorized personnel. But, said manual control cannot ensure a sufficient operation efficiency of the unit. Therefore, with the present invention, there is provided a control system used for modeling and optimizing an industrial diesel hydroprocessing unit (S).

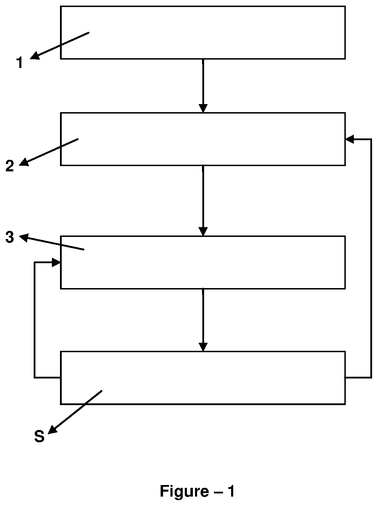

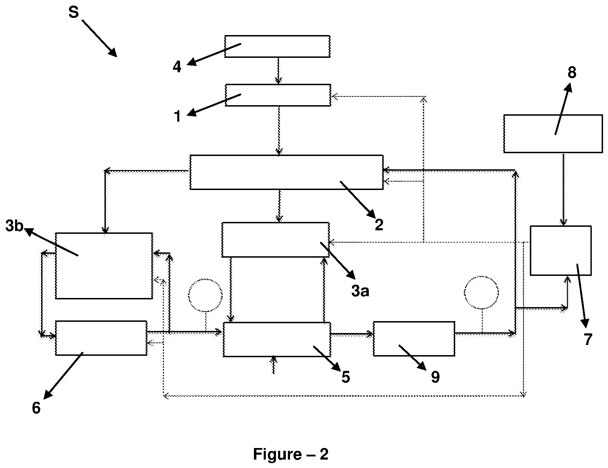

The control system according to the present invention, as illustrated in figures 1 and 2, which is suitable for use in an industrial diesel hydroprocessing unit (S) comprises at least one steady state optimization unit (1) that includes models of hydrodesulfurization and hydroprocessing reactor beds and a combined model of a plurality of supply flow components and calculates an optimum point at which the unit must operate using the models therein as well as the current charge components, product price information, operational constraints of the unit and planning instruction information; at least one constrained supervisory model predictive control unit (2) to which operation parameters (i.e. T95 point of the charge, T95 point of the diesel product and the amount of desulfurization) at optimum point that is calculated in the steady state optimization unit (1) are conveyed and which determines T95 target point of the charge and the target values of the bed exit temperatures using the operation parameters conveyed thereto together with a model; and at least one constrained regulatory model predictive control unit (3) to which T95 target point of the charge and the target values of the bed exit temperatures obtained in the constrained supervisory model predictive control unit (2) are conveyed and which adjusts the amount of the components of the charge to be conveyed to the industrial diesel hydroprocessing unit (S) and the bed inlet temperatures of the reactors (5) in the diesel hydroprocessing unit (S), based on the T95 target point of the charge.

An illustrative embodiment of the control system according to the present invention is shown in figure 2. In this embodiment, the steady state optimization unit (1) including models of hydrodesulfurization and hydroprocessing reactor beds and a combined model of a plurality of supply flow components calculates an optimum point at which the industrial diesel hydroprocessing unit (S) must operate using the current charge components, product price information, operational constraints of the unit and planning instruction information. Based on the optimum operation point calculated in the steady state optimization unit (1), T95 target value of the charge and the target values of the bed exit temperatures are determined in the constrained supervisory model predictive control unit (2). Based on the target values of the bed exit temperatures, at least one regulatory reactor predictive control unit (3a) of the constrained regulatory model predictive control unit (3) adjusts the bed inlet temperatures of the reactors (5) in the industrial diesel hydroprocessing unit (S). Similarly, based on the T95 target point of the charge, at least one regulatory blending predictive control unit (3b) of the constrained regulatory model predictive control unit (3) adjusts the structure of the charge to be supplied into the reactors (5) by controlling a blender (6) of the industrial diesel hydroprocessing unit (S). The products obtained in the reactors (5) are transferred into a separator (9) and diesel is separated from foreign substances. In this way, the industrial diesel hydroprocessing unit (S) is operated in an efficient manner.

In a preferred embodiment of the invention, the control system comprises at least one data input unit (4) in order to input to the steady state optimization unit (1) the current charge components, product price information, operational constraints of the unit and planning instruction information. Said data input unit (4) is preferably in the form of a computer. In this embodiment, said information may either be inputted manually via a keyboard and a mouse or may be retrieved automatically from a server. In this way, the control system is operated with updated data.

In another preferred embodiment of the invention, the control system comprises at least one analysis unit (8) analyzing the diesel obtained in the industrial diesel hydroprocessing unit (S) and at least one model updating unit (7) that updates models of the steady state optimization unit (1) based on the results obtained in the analysis unit (8). In this way, the models of the steady state optimization unit (1) are kept updated.

In the control system according to the present invention, an optimum operation point of the industrial diesel-hydroprocessing unit (S) is determined through the steady state optimization unit (1). Based on the optimum operation point determined, operation parameters of the industrial diesel hydroprocessing unit (S) are formed in constrained supervisory model predictive control unit (2) and the constrained regulatory model predictive control unit (3). In this way, the industrial diesel hydroprocessing unit (S) is operated in an efficient manner.

## Claims

1. A control system used for modeling and optimizing an industrial diesel hydroprocessing unit (S), **characterized by** comprising:
- at least one steady state optimization unit (1) that includes models of hydrodesulfurization and hydroprocessing reactor beds and a combined model of a plurality of supply flow components and calculates an optimum point at which the unit must operate using the models therein as well as the current charge components, product price information, operational constraints of the unit and planning instruction information;
- at least one constrained supervisory model predictive control unit (2) to which operation parameters at optimum point that is calculated in the steady state optimization unit (1) are conveyed and which determines T95 target point of the charge and the target values of the bed exit temperatures using the operation parameters conveyed thereto together with a model;
- at least one constrained regulatory model predictive control unit (3) to which T95 target point of the charge and the target values of the bed exit temperatures obtained in the constrained supervisory model predictive control unit (2) are conveyed and which adjusts the amount of the components of the charge to be conveyed to the industrial diesel hydroprocessing unit (S) and the bed inlet temperatures of the reactors (5) in the diesel hydroprocessing unit (S), based on the T95 target point of the charge.

2. A control system according to claim 1, **characterized in that** the said constrained regulatory model predictive control unit (3) includes at least one regulatory reactor predictive control unit (3a) that adjusts the bed inlet temperatures of the reactors (5) in the industrial diesel hydroprocessing unit (S).

3. A control system according to claim 1, **characterized in that** the said constrained regulatory model predictive control unit (3) includes at least one regulatory blending predictive control unit (3b) that adjusts the structure of the charge to be supplied into the reactors (6) by controlling a blender (6) of the industrial diesel hydroprocessing unit (S).

4. A control system according to claim 1, **characterized by** comprising at least one data input unit (4) in order to input to the steady state optimization unit (1) the current charge components, product price information, operational constraints of the unit and planning instruction information.

5. A control system according to claim 1, **characterized by** comprising at least one analysis unit (8) analyzing the diesel obtained in the industrial diesel hydroprocessing unit (S) and at least one model updating unit (7) that updates models of the steady state optimization unit (1) based on the results obtained in the analysis unit (8).

## Patentansprüche

1. Regelsystem, das zur Modellierung und Optimierung einer industriellen Diesel-Hydroprozessierungsanlage (S) verwendet wird, **gekennzeichnet durch**:
- wenigstens eine Gleichgewichtszustand-Optimierungseinheit (1), die Modelle von Hydroentschwefelungs- und Hydroprozessierungs-Reaktorbetten und ein kombiniertes Modell einer Mehrzahl von Zuflusskomponenten enthält und unter Verwendung der Modelle darin wie auch der gegenwärtigen Einsatzstoffe, Produktpreisinformationen, Betriebszwangsbedingungen der Anlage und von Planungsinstruktionsinformationen einen optimalen Punkt berechnet, bei dem die Einheit arbeiten muss,
- wenigstens eine prädiktive Regeleinheit (2) mit einem Überwachungsmodell mit Randbedingungen, der Betriebsparameter bei dem optimalen Punkt, der in der Gleichgewichtszustand-Optimierungseinheit (1) berechnet worden ist, zugeführt werden und die einen T95-Zielpunkt der Einsatzstoffe und Zielwerte der Bettausgangstemperaturen unter Verwendung der zugeführten Betriebsparameter zusammen mit einem Modell bestimmt,
- wenigstens eine prädiktive Regeleinheit (3) mit einem Regulierungsmodell mit Randbedingungen, der der T95-Zielpunkt der Einsatzstoffe und die Zielwerte der Bettausgangstemperaturen, die in der prädiktiven Regeleinheit (2) mit Überwachungsmodell mit Randbedingungen erhalten worden sind, zugeführt werden und die die Mengen der Komponenten der Einsatzstoffe, die der industriellen Diesel-Hydroprozessierungsanlage (S) zugeführt werden, und die Betteinlasstemperaturen der Reaktoren (5) in der Diesel-Hydroprozessierungsanlage (S) auf Basis des T95-Zielpunkts der Einsatzstoffe einstellt.

2. Regelsystem nach Anspruch 1, **dadurch gekennzeichnet, dass** die prädiktive Regeleinheit (3) mit Regulierungsmodell mit Randbedingungen wenigstens eine prädiktive Reaktorregeleinheit (3a) enthält, die die Betteinlasstemperaturen der Reaktoren (5) in der industriellen Diesel-Hydroprozessierungsanlage (S) einstellt.

3. Regelsystem nach Anspruch 1, **dadurch gekennzeichnet, dass** die prädiktive Regeleinheit (3) mit Regulierungsmodell mit Randbedingungen wenigstens eine prädiktive Mischregeleinheit (3b) enthält, die die Struktur der Einsatzstoffe, die in die Reaktoren (6) einzuführen sind, durch Steuern eines Mischers (6) der industriellen Diesel-Hydroprozessierungsanlage (S) einstellt.

4. Regelsystem nach Anspruch 1, **dadurch gekennzeichnet, dass** es wenigstens eine Dateneingabeeinheit (4) aufweist, um die gegenwärtigen Einsatzstoffkomponenten, Produktpreisinformationen, Betriebszwangsbedingungen der Anlage und Planungsinstruktionsinformationen in die Gleichgewichtszustands-Optimierungseinheit (1) einzugeben.

5. Regelsystem nach Anspruch 1, **gekennzeichnet durch** wenigstens eine Analyseeinheit (8), die den in der industriellen Diesel-Hydroprozessierungsanlage (S) erhaltenen Diesel analysiert, und durch wenigstens eine Modellaktualisierungseinheit (7), die Modelle der Gleichgewichtszustands-Optimierungseinheit (1) auf Grundlage der in der Analyseeinheit (8) erhaltenen Resultate aktualisiert.

## Revendications

1. Système de commande utilisé pour modéliser et optimiser une unité industrielle d'hydrotraitement de diesel (S), caractérisé comme comprenant :
- au moins une unité d'optimisation de régime permanent (1) qui inclut des modèles d'hydrodésulfuration et des lits de réacteur d'hydrotraitement et un modèle combiné d'une pluralité de composantes de flux d'alimentation et qui calcule un point optimal auquel l'unité doit fonctionner en utilisant les modèles en son sein aussi bien que les composantes de charge courantes, des informations de prix de produit, des contraintes opérationnelles de l'unité et des informations d'instruction de planification ;
- au moins une unité de commande prédictive à modèle de surveillance contraint (2) à laquelle des paramètres de fonctionnement au point optimal qui est calculé dans l'unité d'optimisation de régime permanent (1) sont transportés et qui détermine un point cible T95 de la charge et les valeurs cibles des températures de sortie de lit en utilisant les paramètres de fonctionnement transportés jusqu'à celle-ci en même temps qu'un modèle ;
- au moins une unité de commande prédictive à modèle de régulation contraint (3) auquel un point cible T95 de la charge et les valeurs cibles des températures de sortie de lit obtenus dans l'unité de commande prédictive à modèle de surveillance contraint (2) sont transportés et qui ajuste la quantité des composantes de la charge à transporter jusqu'à l'unité industrielle d'hydrotraitement de diesel (S) et les températures d'entrée de lit des réacteurs (5) dans l'unité d'hydrotraitement de diesel (S), sur la base du point cible T95 de la charge.

2. Système de commande selon la revendication 1, **caractérisé en ce que** ladite unité de commande prédictive à modèle de régulation contraint (3) inclut au moins une unité de commande prédictive de réacteur de régulation (3a) qui ajuste les températures d'entrée de lit des réacteurs (5) dans l'unité industrielle d'hydrotraitement de diesel (S).

3. Système de commande selon la revendication 1, **caractérisé en ce que** ladite unité de commande prédictive à modèle de régulation contraint (3) inclut au moins une unité de commande prédictive de mélange de régulation (3b) qui ajuste la structure de la charge à fournir dans les réacteurs (6) en commandant un mélangeur (6) de l'unité industrielle d'hydrotraitement de diesel (S).

4. Système de commande selon la revendication 1, caractérisé comme comprenant au moins une unité d'entrée de données (4) afin d'entrer dans l'unité d'optimisation de régime permanent (1) les composantes de charge courantes, des informations de prix de produit, des contraintes opérationnelles de l'unité et des informations d'instruction de planification.

5. Système de commande selon la revendication 1, caractérisé comme comprenant au moins une unité d'analyse (8) analysant le diesel obtenu dans l'unité industrielle d'hydrotraitement de diesel (S) et au moins une unité de mise à jour de modèle (7) qui met à jour des modèles de l'unité d'optimisation de régime permanent (1) sur la base des résultats obtenus dans l'unité d'analyse (8).
